# EUROPÄISCHE PATENTSCHRIFT

(11) **EP 0 837 799 B1**
(45) Veröffentlichungstag und Bekanntmachung des Hinweises auf die Patenterteilung: **13.10.1999**
(21) Anmeldenummer: 96925662.7
(22) Anmeldetag: 05.07.1996
(51) Int. Cl.: B60S 1/36

(54) **ANTRIEBSAGGREGAT FÜR EINE MOTORISCH BEWEGBARE EINRICHTUNG IN EINEM KRAFTFAHRZEUG**
DRIVING UNIT FOR A MOTOR-DRIVEN DEVICE IN A MOTOR VEHICLE
ORGANE D'ENTRAINEMENT D'UN DISPOSITIF SUSCEPTIBLE D'ETRE MIS EN MOUVEMENT PAR UN MOTEUR DANS UN VEHICULE A MOTEUR

(30) Priorität: 10.07.1995 DE 19525093; 07.11.1995 DE 19541437
(43) Veröffentlichungstag der Anmeldung: 29.04.1998
(73) Patentinhaber: Krupp Presta Aktiengesellschaft, 9492 Eschen (LI)
(72) Erfinder: GRAF, Martin, CH-9479 Oberschaan (CH); KRÄTTLI, Christian, CH-7204 Untervaz (CH); KUNZ, Markus, CH-7302 Landquart (CH); PFIFFNER, Guido, CH-8887 Mels (CH)
(74) Vertreter: Torggler, Paul Norbert
(86) Internationale Anmeldenummer: EP9602953
(87) Internationale Veröffentlichungsnummer: WO9702968

(56) Entgegenhaltungen:
- EP-A- 0 118 012
- EP-A- 0 166 156
- EP-A- 0 210 762
- EP-A- 0 223 390
- EP-A- 0 740 401
- WO-A-93/18944
- DE-A- 2 656 191
- DE-A- 3 619 069
- FR-A- 2 499 653
- FR-A- 2 664 644
- US-A- 4 884 844
- US-A- 5 301 383
- US-A- 5 355 061

## Beschreibung

Die Erfindung betrifft ein Antriebsaggregat mit einem Elektromotor und mit einem als Umlaufgetriebe ausgebildeten Untersetzungsgetriebe, die in einer gemeinsamen Achse liegen, zum Antrieb einer motorisch bewegbaren Einrichtung in einem Kraftfahrzeug, beispielsweise eines Fensterhebers, eines Scheibenwischers od. dgl., wobei das Umlaufgetriebe einen karosseriefesten, innenverzahnten Ring, einen angetriebenen Rotor mit einer zur Achse ungleichmäßig beabstandeten Umfangsfläche und ein auf dem Rotor verdrehbar angeordnetes, außenverzahntes Antriebsübertragungselement aufweist, das eine kleinere Zahnzahl aufweist, in den karosseriefesten Ring eingreift und einem Getriebeelement der bewegbaren Einrichtung zugeordnet ist.

In Kraftfahrzeugen besteht generell das Problem, die verschiedenen Einbauteile möglichst platzsparend und gleichzeitig servicefreundlich auszubilden und anzuordnen. Elektromotorisch betriebene Einrichtungen werden mit schnell laufenden Elektromotoren ausgestattet, denen entsprechende Untersetzungsgebiete zugeordnet sind.

Beispiele für möglichst kompakte Antriebsaggregate, die einen Elektromotor und ein Getriebe umfassen, zeigen die EP-A-388 500 für eine Fensterscheibe, die EP-A-622 260 für ein Hubdach, die WO-A-93/18944 für einen Einarmscheibenwischer, und die US-A-4,884,844 für eine Sitzlehnenverstellung. Dabei ist nach den EP-A-388 500 und EP-A-622 260 die Motorwelle mit einer Schnecke versehen, die in eine Umfangsverzahnung des Getriebes eingreift, und nach der WO-A-93/18944 ein in der Achse des Motors liegendes Planetenradgetriebe in Verwendung. Indem sie entweder zufriedenstellende Untersetzungsverhältnisse liefern, jedoch relativ viel Platz benötigen (EP-A-388 500, EP-A-622 260) oder bei kompakter koaxialer Bauweise eine eher nur geringe Untersetzung bieten (WO-A-93/18944), können diese bekannten Lösungen jeweils nur einem Teilaspekt gerecht werden.

Eine hohe Übersetzung wird auch durch ein Exzenterumlaufgetriebe erzielt, jedoch ist hierin kein Massenausgleich gegeben. Die ein Antriebsaggregat der eingangs genannten Art beschreibende US-A-4,884,844 die den nächstliegenden Stand der Technik darstellt, der dem Oberbegriff des Anspruchs 1 entspricht verwendet daher ein zweistufiges Exzenterumlaufgetriebe, das an einen flachen Elektromotor angesetzt ist. Allerdings ist durch die zweite Getriebestufe wiederum eine relativ große axiale Erstreckung des Antriebsaggregats nicht zu vermeiden.

Nach dem erfindungsgemäßen Vorschlag werden nun eine besonders platzsparende Konstruktion, ein sehr hohes Untersetzungsverhältnis und ein Massenausgleich dadurch erreicht, daß das Umlaufgetriebe als Spannungswellengetriebe ausgebildet ist, das einen elliptischen Rotor und ein flexibles, in einander diametral gegenüberliegenden Bereichen in den innenverzahnten Ring eingreifendes Antriebsübertragungselement aufweist.

Eine hohe Untersetzung, wie sie Spannungswellengetriebe ermöglichen, erlaubt eine höhere Drehzahl des Antriebsmotors, sodaß als Antriebsmotor insbesondere ein Scheibenläufermotor vorgesehen sein kann, der eine sehr geringe axiale Erstreckung im Vergleich zu üblichen Motoren aufweist, und dessen Rotorscheibe mit dem elliptischen Rotor des Spannungswellengetriebes direkt verbunden ist. Die Kombination eines Spannungswellengetriebes und eines Scheibenläufermotors stellt daher eine äußerst kompakte, geringen Platz beanspruchende Antriebseinheit dar, die bevorzugt auch für den Antrieb einer Scheibenwischeranlage, etwa für einen Heckscheibenwischer eingesetzt werden kann. Gerade dort ist ein geringer Platzbedarf und ein geringes Gewicht von besonderem Vorteil, da der Scheibenwischer im allgemeinen in der Heckklappe untergebracht werden muß. Natürlich läßt sich das Antriebsaggregat auch in Frontscheibenwischer einbauen, deren Wischerarm eine konstante oder veränderbare Länge aufweist.

Nachstehend wird nun die Erfindung anhand der Figuren der beiliegenden Zeichnungen näher beschrieben, ohne darauf beschränkt zu sein.

Es zeigen:
- Fig. 1: einen Axialschnitt durch ein erfindungsgemäßes Antriebsaggregat,
- Fig. 2: einen Axialschnitt durch ein Antriebsaggregat für einen Fensterheber,
- Fig. 3: einen Axialschnitt durch ein erfindungsgemäßes Antriebsaggregat für eine einfache Scheibenwischeranlage,
- Fig. 4: eine schematische Draufsicht auf eine Scheibenwischeranlage mit längenveränderbarem Wischerarm,
- Fig. 5: einen axialen Längsschnitt durch das Antriebsaggregat der Scheibenwischeranlage nach Fig. 4,
- Fig. 6: einen Querschnitt durch den Wischerarm nach Fig. 4.
- Fig. 7: eine Schrägansicht des Antriebsaggregates einer zweiten Ausführung einer Scheibenwischeranlage mit längenveränderbarem Wischerarm, und
- Fig. 8: einen Axialschnitt durch das Antriebsaggregat nach Fig. 7.

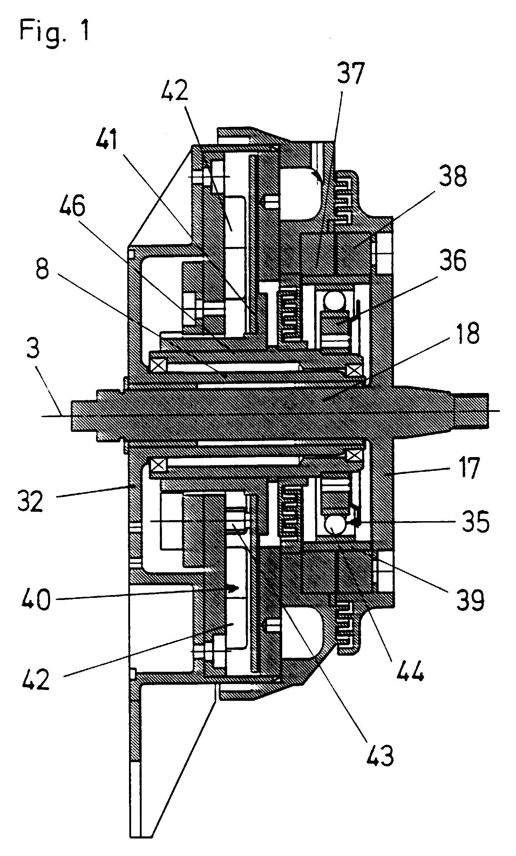

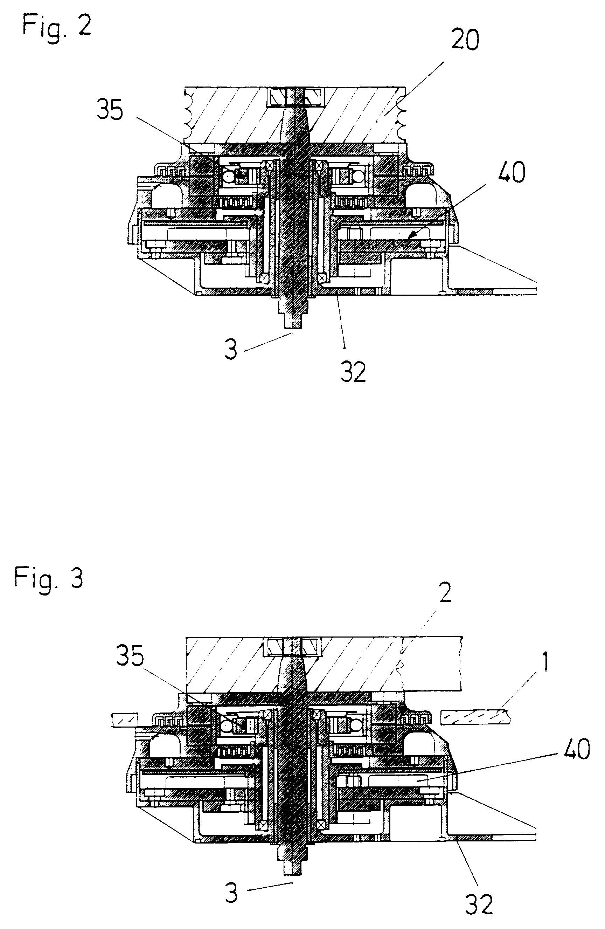

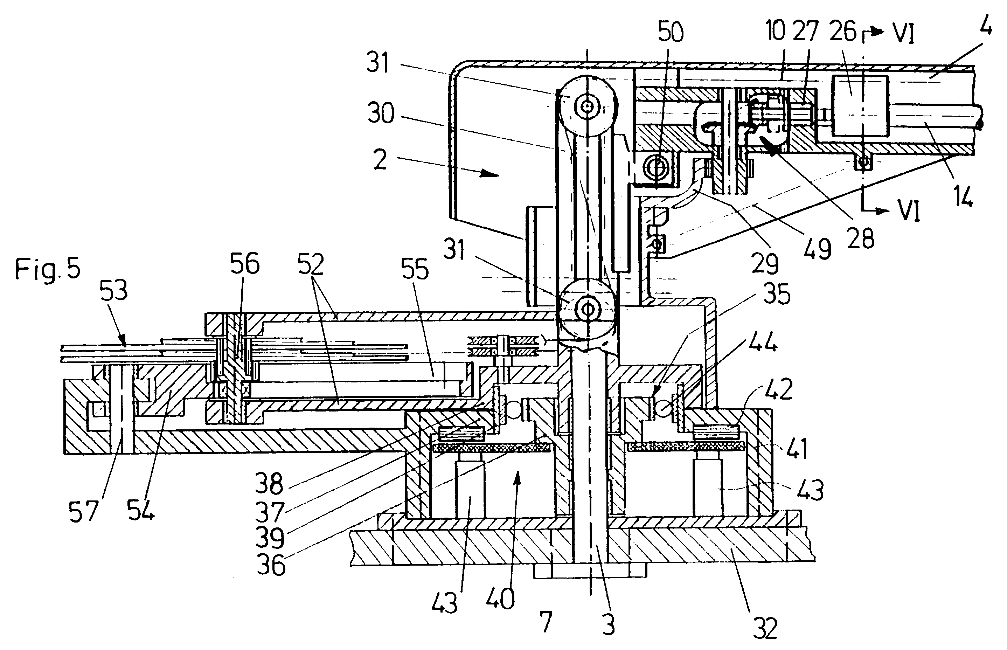

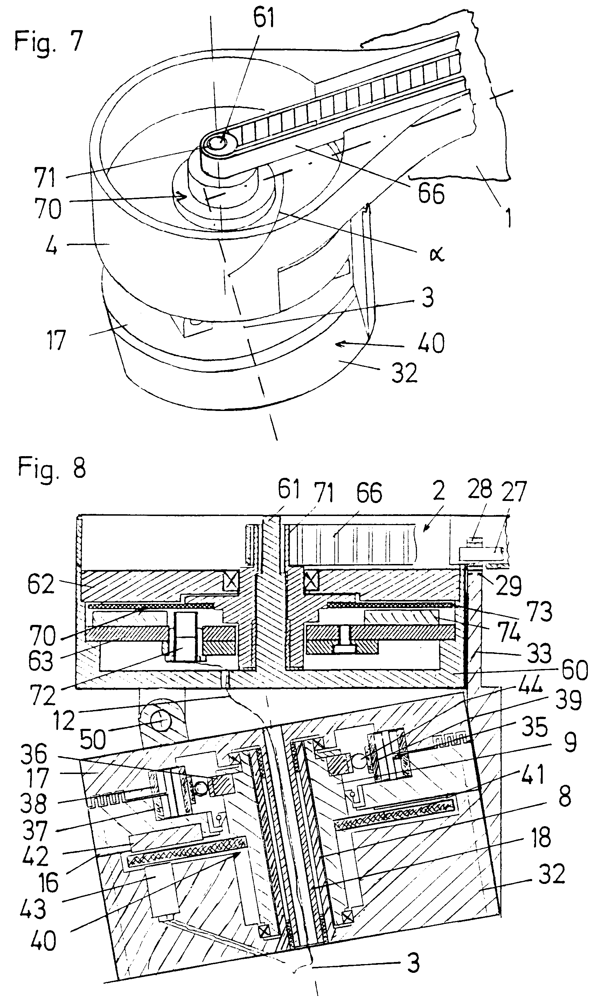

Das in Fig. 1 allein und in den Fig. 2 und 3 in Kombination mit einer Seilscheibe 20 für einen Fensterheber (Fig. 2) bzw. mit einem Wischerarm (Fig. 3) gezeigte Antriebsaggregat umfaßt einen Scheibenläufermotor 40 und ein Spannungswellengetriebe 35. Die beiden Elemente 35, 40 sind koaxial in einer Achse 3 angeordnet. Eine an der Fahrzeugkarosserie fixierbare Grundplatte 32 trägt einen hohlen Lagerzapfen 8, in dem die Abtriebswelle 18 des Spannungswellengetriebes 35 gelagert ist. Die Grundplatte 32 ist mit Magneten 42 und Bürsten 43 bestückt, denen eine Rotorscheibe 41 des Scheibenläufermotors 40 zugeordnet ist. Die Rotorscheibe 41 ist an einer auf dem Lagerzapfen 8 gelagerten Hülse 46 fixiert, die auch den als elliptischen Körper ausgebildeten Rotor 36 des Spannungswellengetriebes 35 trägt. Die Fig. 1, 2 und 3 zeigen jeweils einen Axialschnitt in der großen Ellipsenachse, hingegen verlaufen die Schnitte in den Fig. 5 und 8 in der kleinen Ellipsenachse. Der Rotor 36 bewegt über ein Wälzlager 44 ein flexibles Übertragungselement 39 (die Spannungswelle), das eine Außenverzahnung aufweist, mit der es einerseits in ein mit der Grundplatte 32 verbundenes und daher karosseriefestes Getriebeelement in Form eines innenverzahnten Ringes 37 und andererseits in ein zweites Getriebeelement eingreift, das ebenfalls in Form eines innenverzahnten Abtriebsringes 38 ausgebildet ist, wobei die beiden Ringe koaxial in der Achse 3 liegen, jedoch eine um eins differierende Zähnezahl aufweisen. Der Abtriebsring 38 ist mit einer das Getriebe abschließenden Abtriebsscheibe 17 verbunden, das auf der im Lagerzapfen 8 innen gelagerten Abtriebswelle 18 angeordnet ist. Auf der Abtriebswelle 18 kann, wie Fig. 2 zeigt, die Seilscheibe 20 eines Fensterhebers, wie Fig. 3 zeigt, der Grundkörper eines Wischerarmes 2, beispielsweise eines Heckscheibenwischers oder ein Teil einer anderen motorisch bewegbaren Einrichtung des Kraftfahrzeuges (Hubdach, Scheinwerfer, Sitz, usw.) fixiert sein.

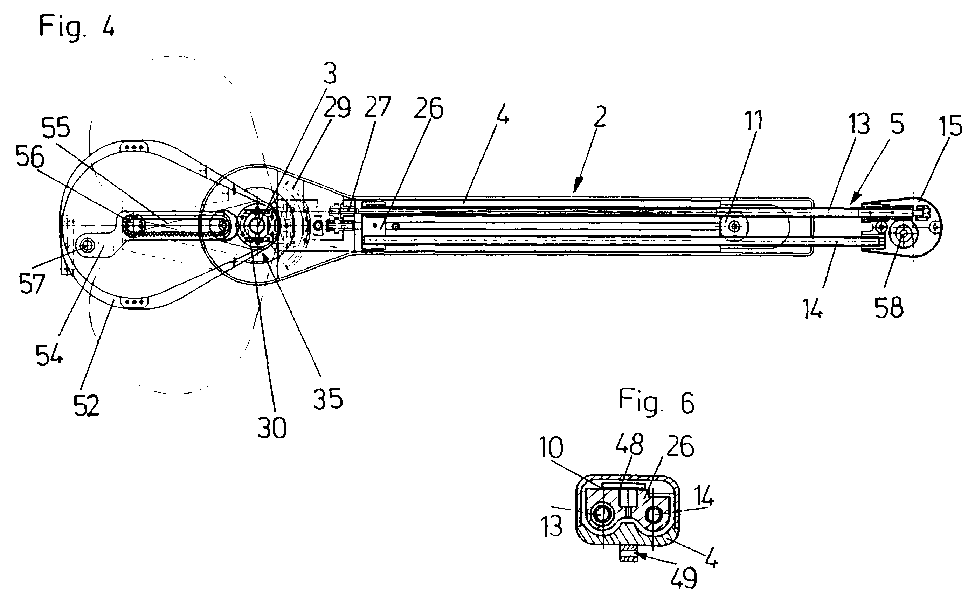

Scheibenwischeranlagen, die einen in der Länge veränderbaren Wischerarm 2 aufweisen und mit einem erfindungsgemäßen Antriebsaggregat ausgestattet sind, zeigen die Fig. 4 bis 8. Eine erste Ausführung, die beispielsweise für die Windschutzscheibe von Personenkraftwagen geeignet ist, weist gemäß Fig. 4 bis 6 einen Wischerarm 2 auf, der auf einem Lagerzapfen 7 um die Achse 3 schwenkbar ist. Der Lagerzapfen 7 ist während der Wischbewegung karosseriefest gehalten, und steht beispielsweise von einer Grundplatte 32 hoch. Mit der Grundplatte 32 ist ein zum Lagerzapfen 7 konzentrisches Element 33 verbunden, das eine sich über etwa 120° erstreckende Verzahnung 29 aufweist. Auf dem Lagerzapfen 7 ist innerhalb des Elementes 33 eine Wischerarmwelle 30 gelagert, an der eine Schwenkachse 50 ausgebildet ist, um die der Wischerarm 2 bzw. der erste Wischerarmteil 4 senkrecht zur Windschutzscheibe 1 zumindest begrenzt beweglich ist. Zwischen dem ersten Wischerarmteil 4 und dem Trägerelement 33 ist eine Zugfeder 49 od. dgl. vorgesehen, die dank der exzentrischen Fixierung am Trägerelement 33 beim Verschwenken des Wischerarmes 2 aus der Mittelstellung nach beiden Seiten die Anpreßkraft des Wischerblattes auf die Scheibe 1 erhöht.

Der Wischerarm 2 weist einen ersten Wischerarmteil 4 und einen zweiten Wischerarmteil 5 auf, der aus zwei im ersten Wischerarmteil 4 ein- und ausschiebbaren Schienen 13, 14 bzw. Stäben, Stangen od.dgl. besteht, deren freie Enden durch ein Lagergehäuse 15 für das Wischerblatt bzw. einen Wischerblatthalter 58 verbunden sind. Die im ersten Wischerarmteil 4 lagernden Enden der Schienen 13, 14 sind durch ein Gleitstück 26 verbunden, sodaß sie gemeinsam verschiebbar sind. Ein Verschiebeantrieb besteht im gezeigten Ausführungsbeispiel aus einem Seilzug 10, der über eine im vorderen Bereich des ersten Wischerarmteiles 4 angeordnete Seilscheibe 11 geführt ist. Eine der beiden Seillängen des Seilzuges 10 ist am Gleitstück 26 mittels einer Klemmscheibe 48 fixiert. Anstelle eines Seilzuges 10 kann die Verschiebung des zweiten Wischerarmteiles 5 auch in anderer Weise erfolgen, beispielsweise über eine Schubkurbel od. dgl.

Das Wischerblatt soll die Windschutzscheibe möglichst vollständig überstreichen und sich dabei im wesentlichen parallel zu den beiden Seitenwänden der Scheibe bewegen. Je nach Scheibenform ist die Wischfläche daher rechteckig, geringfügig trapezförmig, gegebenenfalls auch ringsegmentförmig. Hiefür wird das Wischerblatt für die Wischerblatthalter 58 relativ zum verschiebbaren zweiten Wischerarmteil 5 verdreht, wobei der Drehantrieb vom Schwenkantrieb und der lagerachsfesten Verzahnung 29 abgeleitet wird. Beispielsweise ist eine Schiene 13 des zweiten Wischerarmteiles 5 als Antriebswelle ausgebildet, die einerseits im Wischerblattlagergehäuse 15 und andererseits im Gleitstück 26 drehbar gelagert ist. In den im Wischerblattlagergehäuse 15 gelagerten Endbereich ist die Antriebswelle 13 vorzugsweise mit einer Schnecke versehen, die in ein Schneckenzahnrad des Wischerblatthalters 58 eingreift. Die Antriebswelle 13 ist insbesondere als Hohlwelle ausgebildet, und eine im ersten Wischerarmteil 4 gelagerte Kupplungswelle 27 greift in die hohle Antriebswelle 13 ein. Der Formschluß in Umfangsrichtung wird beispielsweise durch entsprechende vier- oder sechskantige Eingriffsbereiche der beiden Wellen 13, 27 erreicht. Die Kupplungswelle 27 rollt direkt oder über ein Zwischengetriebe an der Verzahnung 29 ab. Die Schiene 13 kann aber ebenso wie die Schiene 14 als Rohr ausgebildet sein, und die Antriebswelle kann im Rohr angeordnet sein.

Der Wischerantrieb umfaßt einen insbesondere drehrichtungsumkehrbaren Antriebsmotor, der insbesondere als Scheibenläufermotor 40 ausgebildet ist (Fig. 5). Mit einer auf dem Lagerzapfen 7 angeordneten Wischerarmwelle 30 drehfest verbunden ist ein Halteelement 52 für drehbar gelagerte Seilscheiben 53, das mit dem Wischerarm 2 mitschwenkt. Die beiden ausgeschwenkten Endstellungen sind in Fig. 4 schematisch ersichtlich. Der Antrieb der Seilscheiben 53, die vorzugsweise als Spiralscheiben ausgebildet sind, um eine nichtlineare Längenänderung des Wischerarmes 2 durch einen gleichförmigen Antrieb zu erreichen, erfolgt über ein auf der Welle 56 der Seilscheiben 53 angeordnetes Ritzel, das in eine Verzahnung eines Schlitzes 55 eingreift (Fig. 4), der in einem um eine Achse 57 schwenkbaren Führungsarm 54 vorgesehen ist. Die Achse 57 steht so wie der Lagerzapfen 7 von der Grundplatte 32 hoch. Beim Verschwenken des Wischerarmes 2 und des Halteelementes 52 der Seilscheiben 53 lenkt der Führungsarm 54 aus, sodaß das Ritzel der Welle 56 in der Schlitzverzahnung 55 abrollt. Da die beiden Seillängen des Seilzuges 10 gegensinnig auf die Seilscheiben 53 aufgewickelt sind, wird der Schwenkantrieb auf die Seilscheiben 53 übersetzt und der Seilzug bewegt den verschiebbaren Wischerarmteil 5 pro Schwenkzyklus des Wischerarmes im festen Wischerarmteil 4 zweimal aus und ein.

Der Rotorscheibe 41 des Scheibenläufermotors 40 sind einerseits Bürsten 43 und andererseits Magnete 42 zugeordnet, die jeweils fest mit der Grundplatte 32 bzw. einem Ring 37 verbunden sind. Die Rotorscheibe 41 ist direkt mit dem Rotor 36 des Spannungswellengetriebes 35 verbunden. Der Rotor 36 ist ein elliptischer Körper, der über ein Wälzlager 44 od. dgl. in einem flexiblen Übertragungselement 39 abrollt. Das Übertragungselement 39 weist eine außenseitige Verzahnung auf, die in zwei einander diametral gegenüberliegenden Bereichen einerseits in eine Innenverzahnung eines lagerachsfesten Ringes 37 und andererseits in eine Innenverzahnung eines mit der Wischerarmwelle 30 verbundenen Abtriebsringes 38 eingreift. Die Zähnezahlen der beiden Ringe 37, 38 unterscheiden sich um zumindest eins. Ein derartiges, auch als Distorsionswellengetriebe bezeichnetes Spannungswellengetriebe 35 weist eine hohe Untersetzung bei minimalem Platzbedarf auf, und reduziert die Drehzahl des ebenfalls einen sehr geringen Platzbedarf aufweisenden Scheibenläufermotors 40, der in Abhängigkeit vom jeweiligen Schwenkwinkel des Wischerarmes 2 direkt umgesteuert wird.

Auch der Scheibenwischer nach Fig. 7 und 8 weist eine während der Schwenkbewegung karosseriefeste Grundplatte 32 auf, von der ein hohler Lagerzapfen 8 hochsteht. Die Grundplatte 32 trägt einen ersten Scheibenläufermotor 40, dessen Abtriebswelle 9 auf dem Lagerzapfen 8 drehbar gelagert ist. Auf der Abtriebswelle 9 ist die Läuferscheibe 41 des ersten Motors 40 vorgesehen, der in der Grundplatte 32 angeordnete Bürsten 43 und an einer Deckplatte 16 angeordnete Magnete 42 zugeordnet sind. Auf der Abtriebswelle 9 ist unmittelbar anschließend ein elliptischer Rotor 36 eines Spannungswellengetriebes 35 fixiert, der über ein Wälzlager 44 ein flexibles, außenverzahntes Übertragungselement 39 antreibt. Das Übertragungselement 39 greift einerseits in einen, an der Deckplatte 16 karosseriefest fixierten, innenverzahnten Ring 37 und einen innenverzahnten Abtriebsring 38 einer Abtriebsscheibe 17 ein, die mit einem im Lagerzapfen 8 innen gelagerten, ebenfalls hohlen Lagerzapfen 18 verbunden ist. Die beiden Innenverzahnungen der Ringe 37, 38 unterscheiden sich um mindestens einen Zahn, und das flexible Übertragungselement 39, das eine nochmals geringere Anzahl von Außenzähnen aufweist, wird bei Drehung des Rotors 36 fortlaufend in beide Ringe 37,38 eingedrückt, wobei es den Abtriebsring 38 verdreht. Dank der elliptischen Ausführung des Rotors 36 sind zwei um 180° versetzte Eingriffsbereiche des Übertragungselementes 39 gegeben. Ein Schwenkwinkelsensor kann beispielsweise unterhalb der Grundplatte 32 an dem durch den Lagerzapfen 8 geführten, und nach unten vorstehenden Lagerzapfen 18 der Abtriebsscheibe 17 angeordnet sein. Die Achse 3 des aus dem ersten Motor 40 und dem Getriebe 35 bestehenden Antriebsaggregates ist in einem Winkel α von beispielsweise 80° zu einer mittleren Auflagelinie des Wischerarmes 2 auf der Scheibe 1 geneigt. Dadurch kippt der Wischerarm 2 beim Verschwenken um seine Längsachse, sodaß Abweichungen des Auflagewinkels des Wischerblattes auf einer gekrümmten Scheibe 1 von der Idealstellung verringert bzw. verhindert werden.

Auf der Abtriebsscheibe 17 ist um eine Querachse 50 begrenzt verschwenkbar eine Gehäuseplatte 60 eines zweiten Scheibenläufermotors 70 als Grundelement des ersten Wischerarmteils 4 angeordnet. Vor der mit der Abtriebsscheibe 17 mitschwenkenden Gehäuseplatte 60 steht ein Lagerzapfen 61 hoch und trägt den zweiten Scheibenläufermotor 70, dessen Abtriebswelle 71 auf dem Lagerzapfen 61 drehbar gelagert ist und eine Abdeckplatte 62 durchsetzt. Auf der Abtriebswelle 71 ist die Läuferscheibe 73 des Motors 70 vorgesehen, der an der Gehäuseplatte 60 bzw. einer Einlagescheibe 63 angeordnete Bürsten 72 und Magnete 74 zugeordnet sind. Die Stromversorgung erfolgt über eine Leitung 12, die durch die hohlen Lagerzapfen 8,18 des ersten Scheibenläufermotors 40 nach unten zu einer Steuerung geführt ist, die beispielsweise an der Unterseite der Grundplatte 32 angeordnet ist. Um die Abtriebswelle 71 des zweiten Motors 70 verläuft ein Zugelement 66, beispielsweise der gezeigte, endlose Zahnriemen, durch den ersten Wischerarmteil 4 zu einem Umlenkrad am vorderen Ende. Mit dem Zugelement 66 ist an einer Stelle das Gleitstück 26 des im ersten Wischerarmteil 4 längsverschiebbaren zweiten Wischerarmteiles 5 verbunden, an dessem freien Ende ein Wischerblatt drehbar gelagert ist. Für die Ermittlung der Ausschublage kann ein Positionssensor beispielsweise im ersten Wischerarmteil 4 im Verschiebebereich des zweiten Wischerarmteiles 5 vorgesehen sein.

Der Drehantrieb des Wischerblattes erfolgt beispielsweise durch eine teleskopische Welle 13, 27, die am inneren Ende ein Ritzel eines Kronenradgetriebes 28 trägt, das sich in einer Verzahnung 29 abwälzt, die an einem mit der Grundplatte 32 verbundenen Element 33 ausgebildet ist. Dadurch wird die Relativbewegung zwischen dem schwenkenden Wischerarm 2 und der Grundplatte 32 über die Welle 13, 27 nach vorne zum Wischerblatt übertragen, das sich dadurch relativ zum Wischerarm 2 verdreht und eine annähernd parallele Lage zu den beiden Seitenrändern der Scheibe 1 beibehält.

In allen Ausführungen kann das Spannungswellengetriebe 35 natürlich auch von einem herkömmlichen umsteuerbaren Elektromotor angetrieben werden.

## Patentansprüche

1. Antriebsaggregat mit einem Elektromotor und mit einem als Umlaufgetriebe (35) ausgebildeten Untersetzungsgetriebe, die in einer gemeinsamen Achse (3) liegen, zum Antrieb einer motorisch bewegbaren Einrichtung in einem Kraftfahrzeug, beispielsweise eines Fensterhebers, eines Scheibenwischers od. dgl., wobei das Umlaufgetriebe (35) einen karosseriefesten, innenverzahnten Ring (37), einen angetriebenen Rotor (36) mit einer zur Achse (3) ungleichmäßig beabstandeten Umfangsfläche und ein auf dem Rotor (36) verdrehbar angeordnetes, außenverzahntes Antriebsübertragungselement (39) aufweist, das eine kleinere Zahnzahl aufweist, in den karosseriefesten Ring (37) eingreift und einem Getriebeelement der bewegbaren Einrichtung zugeordnet ist, dadurch gekennzeichnet, daß das Umlaufgetriebe als Spannungswellengetriebe ausgebildet ist, das einen elliptischen Rotor (36) und ein flexibles, in einander diametral gegenüberliegenden Bereichen in den innenverzahnten Ring (37) eingreifendes Antriebsübertragungselement (39) aufweist.

2. Antriebsaggregat nach Anspruch 1, dadurch gekennzeichnet, daß das Getriebeelement der bewegbaren Einrichtung durch einen zweiten innenverzahnten Ring (38) mit gleichem Durchmesser gebildet ist, wobei die Zahnzahlen der beiden nebeneinander angeordneten Ringe (37, 38) um mindestens eins differieren, und daß das flexible Antriebsübertragungselement (39) in die Verzahnungen beider Ringe (37, 38) eingreift.

3. Antriebsaggregat nach Anspruch 1 oder 2, dadurch gekennzeichnet, daß als Motor ein insbesondere umsteuerbarer Scheibenläufermotor (40) vorgesehen ist, dessen Rotorscheibe (41) mit dem elliptischen Rotor (36) des Spannungswellengetriebes (35) verbunden ist.

4. Scheibenwischeranlage, insbesondere für Personenkraftwagen, mit einem um die Achse (3) schwenkbar angetriebenen Wischerarm (2) und mit einem Antriebsaggregat nach einem der Ansprüche 1 bis 3.

5. Scheibenwischeranlage nach Anspruch 4, dadurch gekennzeichnet, daß der zweite innenverzahnte Ring (38) an einer Abtriebsscheibe (17) vorgesehen ist, auf der der Wischerarm (2) um eine Querachse (50) schwenkbar angeordnet ist.

6. Scheibenwischeranlage nach einem der Ansprüche 4 oder 5, dadurch gekennzeichnet, daß die Achse (3) sich in einem von 90° abweichenden Winkel zu einer eine mittlere Wischerarmstellung definierenden Geraden erstreckt.

7. Scheibenwischeranlage nach Anspruch 6, dadurch gekennzeichnet, daß der Winkel 80° beträgt.

## Claims

1. Drive assembly having an electric motor and a stepdown gear mechanism designed as a planetary gear mechanism (35) which are located on a common axis (3), for driving a motor-operated device, for example a window lifter, a windshield wiper or the like, the planetary gear mechanism (35) having an internally toothed ring (37) which is fixed to the vehicle body, a driven rotor (36) with a peripheral face which is at unequal distances from the axis (3), and an externally toothed drive transmission element (39) which is rotatably arranged on the rotor (36) and meshes with the vehicle-fixed ring (37), and is assigned to a gear element of the movable device, characterised in that the planetary gear mechanism is designed as a strain wave gearing which has an elliptical rotor (36) and a flexible drive transmission element (39) which engages, in diametrically opposite areas, in the internally toothed ring (37).

2. Drive assembly as claimed in claim 1, characterised in that the gear element of the movable device is formed by a second internally toothed ring (38) with the same diameter, the numbers of teeth of the two rings (37, 38) which are arranged one next to the other differing by at least one, and that the flexible drive transmission element (39) engages in the toothings of the two rings (37, 38).

3. Drive assembly as claimed in claim 1 or 2, characterised in that the motor provided is in particular a reversible disk rotor motor (40) whose rotor disk (41) is connected to the elliptical rotor (36) of the strain wave gearing (35).

4. Windshield wiper system, in particular for passenger vehicles, having a pivotably driven wiper arm (2) and having a drive assembly as claimed in one of claims 1 to 3.

5. Windshield wiper system as claimed in claim 4, characterised in that the second internally toothed ring (38) is provided on an output disk (17) on which the wiper arm (2) is arranged so as to be capable of pivoting about a transverse axis (50).

6. Windshield wiper system as claimed in one of claims 4 or 5, characterised in that the axis (3) extends at an angle different from 90° relative to a straight line defining a central wiper arm position.

7. Windshield wiper system as claimed in claim 6, characterised in that the angle is 80°.

## Revendications

1. Groupe d'entraînement avec un moteur électrique et avec une transmission de réduction des vitesses, réalisée sous la forme d'une transmission épicycloïdale (35), le moteur et la transmission étant montés dans un axe (3) commun pour assurer l'entraînement d'un dispositif mobile mû par un moteur dans un véhicule automobile, par exemple un lève-vitre, un essuie-glace ou analogue, la transmission épicycloïdale (35) présentant une couronne (37) à denture intérieure fixée à la carrosserie, un rotor (36) entraîné ayant une face périphérique espacée de façon irrégulière par rapport à l'axe (3), et un élément de transmission d'entraînement (39) à denture extérieure disposé de façon à pouvoir tourner sur le rotor (36), élément présentant un plus petit nombre de dents, s'engageant dans la couronne (37) fixée à la carrosserie et associé à un élément de transmission appartenant au dispositif mobile, caractérisé en ce que la transmission épicycloïdale est réalisée sous la forme d'une transmission à arbre sous contrainte, présentant un rotor (36) elliptique et un élément de transmission d'entraînement (39) flexible, s'engageant dans des zones diamétralement opposées dans la couronne (37) à denture intérieure.

2. Groupe d'entraînement selon la revendication 1, caractérisé en ce que l'élément de transmission du dispositif mobile est constitué par une deuxième couronne (38) à denture intérieure, de même diamètre, les nombres de dents des deux couronnes (37, 38) disposées l'une à côté, de l'autre différant d'au moins un, et en ce que l'élément de transmission d'entraînement (39) flexible s'engage dans les dentures des deux couronnes (37, 38).

3. Groupe d'entraînement selon la revendication 1 ou 2, caractérisé en ce qu'est prévu comme moteur un moteur à entrefer plat (40), en particulier pouvant être commandé avec une inversion de sens de rotation, dont le disque de rotor (41) est relié au rotor elliptique (36) de la transmission à arbre sous contrainte.

4. Installation d'essuie-glace, en particulier pour des voitures particulières, avec un bras d'essuie-glace (2) entraîné de façon à pouvoir pivoter autour de l'axe (3) et avec un groupe d'entraînement selon l'une des revendications 1 à 3.

5. Installation d'essuie-glace selon la revendication 4, caractérisée en ce que la deuxième couronne (38) à denture intérieure est prévue sur un disque mené (17) sur lequel le bras d'essuie-glace (2) est disposé de façon à pouvoir pivoter autour d'un axe transversal (50).

6. Installation d'essuie-glace selon l'une des revendications 4 ou 5, caractérisée en ce que l'axe (3) s'étend sous un angle différent de 90°, par rapport à une droite définissant une position centrale de bras d'essuie-glace.

7. Installation d'essuie-glace selon la revendication 6, caractérisée en ce que l'angle est de 80°.
